# EUROPEAN PATENT APPLICATION

(11) **EP 1 762 823 A2**
(43) Date of publication of application: **14.03.2007**
(21) Application number: 06018553.5
(22) Date of filing: 05.09.2006
(51) Int. Cl.: G01C 19/56, G01P 15/097

(54) **Combined sensor and its fabrication method**

(30) Priority: 07.09.2005 JP 2005258652
(71) Applicant: Hitachi, Ltd., Tokyo (JP)
(72) Inventor: Akashi, Teruhisa, c/o Hitachi, Ltd., Chiyoda-ku, Tokyo 100-8220 (JP); Okada, Ryoji, c/o Hitachi, Ltd., Chiyoda-ku, Tokyo 100-8220 (JP); Hayashi, Masahide, c/o Hitachi, Ltd., Chiyoda-ku, Tokyo 100-8220 (JP); Suzuki, Kengo, c/o Hitachi, Ltd., Chiyoda-ku, Tokyo 100-8220 (JP)
(74) Representative: Beetz & Partner

(57) **Abstract**

A sensor structure using vibrating sensor elements (1a, 1b, 1c, 1d) which can detect an angular rate and accelerations in two axes at the same time is provided. 2 sets of vibration units (1a, 1b; 1c, 1d) which vibrate in out-of-phase mode (tunning-fork vibration) and include four vibrating sensor elements of the approximately same shape supported on a substrate in a vibratile state are provided and the vibrating sensor elements are disposed so that vibration axes of the vibration units cross each other at right angles. Each of the vibrating sensor elements includes a pair of detection units (3a, 3b, 3c, 3d) and adjustment units (4a, 4b, 4c, 4d) for adjusting a vibration frequency. The vibrating sensor elements constitute a combined sensor having supporting structure for supporting the vibrating sensor elements independently so that the vibrating sensor elements do not interfere with each other.

## Description

### BACKGROUND OF THE INVENTION

The present invention relates to a vibrating sensor element formed on a substrate and more particularly to a vibrating sensor element constituting a sensor for detecting an angular rate (yaw rate) in one axis applied around an axis in the thickness direction of the substrate and accelerations in two axes applied in the in-plane direction of the substrate and a combined sensor using the vibrating sensor elements.

In order to detect the angular rates applied in the two axial directions in the plane and around the axis in the thickness direction of the substrate, an angular rate sensor structure in which a vibrating sensor element is applied is disclosed in JP-A-11-64002. This publication discloses an integrated structure including vibrating sensor elements disposed in respective sides of a polygon and connected to each other by means of beams. The connected vibrating sensor elements are supported only by a post disposed in the center and floated from the substrate. Detection means for detecting an angular rate applied around the axis in the thickness direction of the substrate is disposed in the center of the connected vibrating sensor elements and detects displacement caused by the Coriolis force corresponding to the applied angular rate as capacitive change caused by rotational displacement of the connected vibrating sensor elements.

Further, JP-A-7-218268 discloses an angular rate sensor structure using vibrating sensor elements for detecting angular rates applied around two axes in the plane of the substrate. This publication discloses an integrated structure including the vibrating sensor elements connected to each other by means of flexible springs in order to easily detect the Coriolis force generated by the applied angular rate. In this structure, the displacement corresponding to the Coriolis force is electrically detected as the capacitive change by detection electrodes formed under the vibrating sensor elements.

### SUMMARY OF THE INVENTION

The structure of the angular rate sensor disclosed in the above-mentioned publications can detect the angular rates applied around a plurality of axes such as two axes in the plane of the substrate, for example. However, the publications do not disclose any combined sensor structure and measures for detecting accelerations in two axes applied in the in-plane direction of the substrate together with the angular rate (yaw rate) applied around the axis in the thickness direction of the substrate.

In the angular rate sensor disclosed in JP-A-11-64002, when the shapes of the vibrating sensor elements are scattered, that is, when there is the individual difference in the vibrating sensor elements, the vibration forms interfere with each other. Accordingly, the vibrating sensor elements of this angular rate sensors are difficult to get the desired optimum vibration forms and amplitudes. The reason thereof is that the vibrating sensor elements are connected to each other by means of the beams as described above and the vibrations thereof interfere with each other. In order to detect the angular rates with high accuracy and sensitivity by this angular rate sensor structure, the shapes of the vibrating sensor elements must be identical and the vibration states thereof must be ideally identical as a minimum. When the vibrating sensor elements are fabricated actually, the individual difference in the vibrating sensor elements produced in fabrication cannot be neglected. Accordingly, it is indispensable to consider the structure that the individual difference is allowable. However, it is considered that the sensor disclosed in the publication has the structure that the individual difference in the vibrating sensor elements caused by error in the fabrication is not allowable. Further, since the vibration characteristics of the vibrating sensor elements of the sensor disclosed in the publication cannot be adjusted independently and separately, it is difficult that the vibrating sensor elements get desired vibration characteristics and detection sensitivity of an ideal sensor.

Moreover, the vibrating sensor elements connected to each other by means of the beams are supported only by the post disposed in the center and floated in the air. This support structure lacks the stability. The tolerance to shock given from the outside of the sensor is low. If the large shock is given, there is the increased possibility that the vibrating sensor elements collide with the substrate supporting the vibrating sensor elements, so that the vibrating sensor elements are broken.

On the other hand, the angular rate sensor disclosed in JP-A-7-218268 has the structure in which the vibrating sensor elements are connected to each other by means of the flexible springs. Accordingly, the vibrations interfere with each other due to the individual difference in the vibrating sensor elements in this angular rate sensor and the vibrating sensor elements are difficult to get the desired vibration forms and amplitudes in the same manner as the sensor disclosed in JP-A-11-64002. Therefore, the sensor structure disclosed in JP-A-11-64002 also has a narrow allowable range for the individual difference in the vibrating sensor elements.

It is a first object of the present invention to provide a combined sensor using vibrating sensor elements capable of detecting an angular rate (yaw rate) applied around an axis in the thickness direction of a substrate and accelerations applied to two axes in the plane of the substrate.

It is a second object of the present invention to provide a vibrating sensor element structure and a combined sensor using the vibrating sensor elements which are difficult to receive interference of vibration exerting mutual influence thereon caused by the individual difference in the vibrating sensor elements and can adjust the individual difference in the vibrating sensor elements easily and get desired vibration characteristics easily.

It is a third object of the present invention to provide a combined sensor having high tolerance to shock that is external disturbance from the outside of the sensor.

In order to achieve the first object, a combined sensor comprises four vibrating sensor elements, each of which includes at least two vibration units having vibration directions crossing each other and a pair of detection means disposed opposite to each other in the direction perpendicular to the vibration direction of the vibrating sensor element and which are supported independently so that vibrations do not interfere with each other.

In order to achieve the second object, the combined sensor comprises adjustment means for adjusting the frequency of vibration and vibration detection means for detecting the vibration frequency.

In order to achieve the third object, in the combined sensor, the vibrating sensor element is composed of silicon substrates piled up and between which glass is held and the silicon substrate is {111}-oriented silicon substrate, the vibrating sensor element being supported in a vibratile state by forming groove in the silicon substrate.

According to the present invention, since two sets of vibration units constituted by two vibrating sensor elements which vibrate in out-of-phase mode (tunning-fork vibration) in an in-plane direction of the substrate are provided and the vibration directions thereof cross each other, the angular rate in one axis applied around the axis in the thickness direction of the substrate and the accelerations in two axes applied in the plane of the substrate can be detected.

Further, since the vibrating sensor elements constituting the vibration units are supported independent of each other, mutual interference of vibrations based on difference in characteristics, that is, individual difference of the vibrating sensor elements can be eliminated. Further, even if there is the individual difference in the vibrating sensor elements, the characteristics of the vibrating sensor elements can be adjusted independently without mutual interference since each of the vibrating sensor elements includes vibration detection means capable of monitoring the vibration state, that is, the frequency of vibration properly and voltage application means for varying the rigidity of beams of the vibrating sensor element to adjust the frequency of vibration. In other words, the combined sensor of the present invention can adjust the individual difference of the vibrating sensor elements constituting the combined sensor easily and get the desired optimum vibration characteristics. Accordingly, the detection sensitivity of the sensor can be improved easily.

Further, since the vibrating sensor element is composed of silicon substrates piled up and between which glass is held and the silicon substrate supporting the vibrating sensor element is a {111}-oriented silicon substrate, a sufficiently deep groove can be formed in the silicon substrate positioned under the vibrating sensor elements while controlling the depth of the groove. By forming the groove, the vibrating sensor element is supported independently in the vibratile state in the in-plane direction and the out-of-plane direction of the substrate. Accordingly, even if shock is given externally of the sensor unexpectedly, the vibrating sensor element can be prevented from colliding with the supporting substrate. Accordingly, the present invention can provide the sensor having high tolerance to shock.

Other objects, features and advantages of the invention will become apparent from the following description of the embodiments of the invention taken in conjunction with the accompanying drawings.

### BRIEF DESCRIPTION OF THE DRAWINGS

Fig. 1 is a schematic diagram illustrating a sensor structure of a combined sensor according to the present invention;
Fig. 2 is a top view showing a vibrating sensor element constituting the combined sensor according to a first embodiment of the present invention;
Fig. 3 is a sectional view showing a section a-a' of the vibrating sensor element according to the first embodiment;
Fig. 4 is a sectional view showing a section b-b' of the vibrating sensor element according to the first embodiment;
Fig. 5 is a sectional view showing a section c-c' of the vibrating sensor element according to the first embodiment;
Fig. 6 is a schematic diagram illustrating the whole combined sensor constituted by four vibrating sensor elements according to the first embodiment;
Fig. 7 is a top view showing a vibrating sensor element constituting a combined sensor according to a second embodiment of the present invention;
Fig. 8 is a schematic diagram illustrating the whole combined sensor constituted by four vibrating sensor elements according to the second embodiment;
Fig. 9 is a top view showing a vibrating sensor element constituting a combined sensor according to a third embodiment of the present invention;
Fig. 10 is a top view showing a vibrating sensor element constituting a combined sensor according to a fourth embodiment of the present invention;
Fig. 11 is a top view showing a vibrating sensor element constituting a combined sensor according to a fifth embodiment of the present invention; and
Figs. 12A to 12G are diagrams showing the process flow for fabricating the vibrating sensor element.

### DESCRIPTION OF THE EMBODIMENTS

Embodiments of a combined sensor according to the present invention are now described in detail with reference to the accompanying drawings.

### EMBODIMENT 1

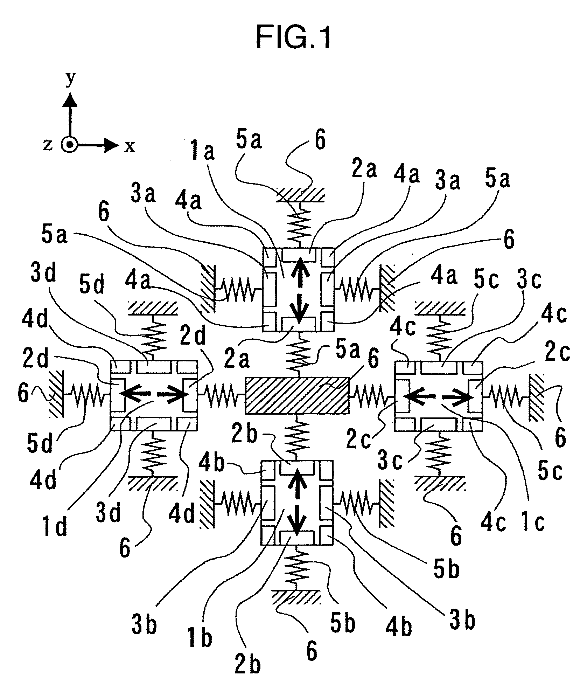

Fig. 1 is a schematic diagram illustrating a sensor structure of a combined sensor according to the present invention. In Fig. 1, vibrating sensor elements 1a, 1b, 1c and 1d that are sensor elements constituting the combined sensor are shown. The vibrating sensor elements have the same structure. Accordingly, structure and operation of the combined sensor according to the present invention are now described with reference to the vibrating sensor element 1a.

The vibrating sensor element 1a is supported in the vibratile state in the x- and y-axis direction in the plane and in the z-axis direction outside of the plane by means of four springs 5a. This reason is that one ends of the springs 5a are connected to anchorages 6 constituting fixing parts connected to a supporting substrate. Other vibrating sensor elements 1b, 1c and 1d are also supported in the same manner. The vibrating sensor element 1a includes vibration generation means 2a disposed opposite to each other in the y-axis direction to vibrate the vibration sensor element 1a. Further, detection means 3a for detecting displacement caused by the Coriolis force generated in proportion to an applied angular rate are disposed opposite to each other in the x-axis direction. Consequently, the axial direction connecting the two vibration generation means 2a and the axial direction connecting the two detection means 3a cross each other, specifically at right angles in the embodiment. Moreover, vibration adjustment means 4a for controlling a frequency of the vibration generated by the vibration generation means 2a are disposed in four corners of the vibration sensor element 1a in this case. When the vibration adjustment means 4a are applied with a voltage, the vibration adjustment means 4a generate electrostatic force in the x-axis direction. Thus, the vibration adjustment means 4a can vibrate the vibrating sensor element easily in the y-axis direction, that is, can vary the spring rigidity (spring constant) in the y-axis direction of the springs 5a.

The vibrating sensor element 1a is supported by the springs independently so that the it does not interfere with the other vibrating sensor elements 1b, 1c and 1d mutually. That is, vibration generated by the vibrating sensor element 1a does not influence the other vibrating sensor elements 1b, 1c and 1d. As described above, the combined sensor of the present invention includes the four vibrating sensor elements 1a, 1b, 1c and 1d, which are supported by the anchorages 6 independent of each other.

The vibrating sensor element 1a vibrates in the y-axis direction as shown in Fig. 1. Further, the vibrating sensor element 1b also vibrates in the y-axis direction in the same manner as the vibrating sensor element 1a. The vibration generation means formed in the vibrating sensor elements 1a and 1b synchronize vibration so that the vibrating sensor elements 1a and 1b vibrate in out-of-phase mode (tunning-fork vibration) in the y-axis direction. The out-of-phase vibration means that phases of mutual vibrations are reversed. In this example, when the vibrating sensor element 1a moves in the positive direction of the y-axis, the vibrating sensor element 1b moves in the negative direction of the y-axis, while when the vibrating sensor element 1a moves in the negative direction of the y-axis, the vibrating sensor element 1b moves in the positive direction of the y-axis. The speeds of the vibrating sensor elements in this case are the same. The vibrating sensor elements 1a and 1b constitute one vibration unit. The same may be said of the vibrating sensor elements 1c and 1d. That is, the vibrating sensor elements 1c and 1d vibrate in out-of-phase mode (tunning-fork vibration) in the x-axis direction and constitute one vibration unit. As apparent from the above description, the vibration axis of the vibration unit constituted by the vibrating sensor elements 1a and 1b is crossed with the vibration axis of the vibration unit constituted by the vibrating sensor elements 1c and 1c at right angles.

Two vibration directions are considered in the vibrating sensor elements. First, there is considered a vibration method in which the vibrating sensor elements 1a, 1b, 1c and 1d approach toward the supporting substrate 6 positioned in the center of the sensor and then go away therefrom. In this case, more particularly, when the vibrating sensor element 1a moves in the negative direction of the y-axis, the vibrating sensor element 1b moves in the positive direction of the y-axis, the vibrating sensor element 1c moves in the negative direction of the x-axis and the vibrating sensor element 1d moves in the positive direction of the x-axis. Second, the vibrating sensor elements constituting one vibration unit approach toward the anchorage 6 connected to the supporting substrate positioned in the center of the sensor, while the vibrating sensor elements constituting the other vibration unit go away therefrom. For example, when the vibrating sensor element 1a moves in the negative direction of the y-axis and the vibrating sensor element 1b moves in the positive direction of the y-axis, the vibrating sensor element 1c moves in the positive direction of the x-axis and the vibrating sensor element 1d moves in the negative direction of the x-axis.

The vibration generation means 2 resonantly vibrates the vibrating sensor elements 1a, 1b, 1c and 1d. The reason is that the amplitude of the vibration, that is, the speed of the vibration is maximized in this case, so that the displacement caused by the Coriolis force proportional to the angular rate can be maximized. In this manner, the vibrating sensor elements 1a, 1b, 1c and 1d are always vibrated at the resonant frequency in the y- or x-axis direction.

It is supposed that the resonant frequency in the y-axis direction is ωy and the resonant frequency in the x-axis direction is ωx in the vibrating sensor element 1a. The y-axis direction is the vibration direction in which the vibrating sensor elements are vibrated and the x-axis direction is the detection direction in which the Coriolis force proportional to the angular rate is applied. In this case, the structure of the springs 5a is designed so that the difference between the resonant frequencies is equal to 2 to 4 % and the resonant frequencies of the vibrating sensor elements are adjusted to fall within this range by means of the vibration adjustment means 4a if necessary. At this time, it is preferable that the resonant frequency ωy in the vibration direction is smaller than the resonant frequency ωx in the detection direction. Even the other vibrating sensor elements are adjusted similarly.

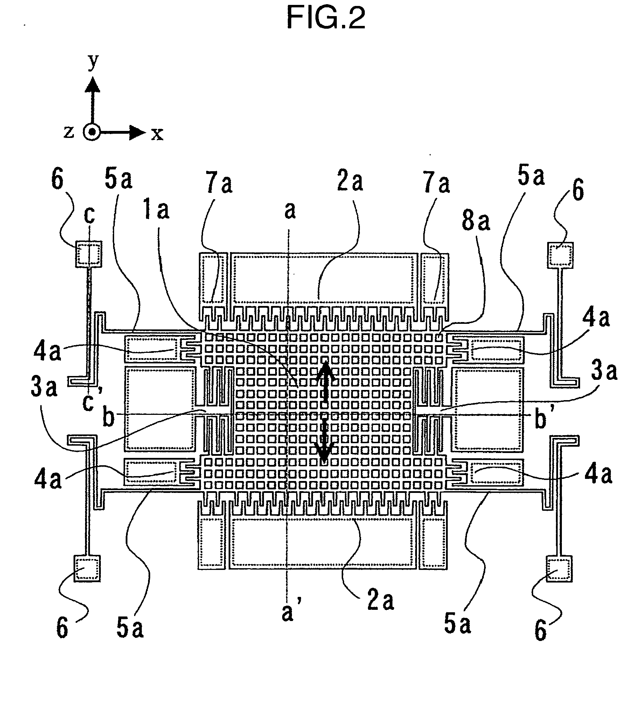

A definite structure of the vibrating sensor element 1a applied to the combined sensor shown in Fig. 1 is now described. Fig. 2 is a top view showing the vibrating sensor element 1a according to the first embodiment.

The vibrating sensor element 1a is formed by dry-etching of a silicon-on-insulator (SOI) substrate. In the embodiment, the silicon substrate on the side of a device layer (active layer) of a silicon-on-insulator wafer is a {100}-oriented silicon substrate and the silicon substrate on the side of a handle layer is a (111)-oriented silicon substrate. The vibrating sensor element 1a is formed by being subjected to the deep reactive ion etching (RIE). The primary flat of the {100}-oriented silicon substrate has the orientation of <110> and the primary flat of the (111)-oriented silicon substrate has the orientation of [-110]. The silicon-on-insulator substrate is formed into a lamination in which the primary flats are piled up so that the directions thereof are the same and an insulating layer thereof is a thermal oxide layer having a thickness of 0.3 µm. The resistivities of the oriented silicon substrates are suitably about 0.001 Ωcm to 0.01 Ωcm. The vibrating sensor element 1a formed on such a substrate is resonantly vibrated by the electrostatic force and has the function for detecting the displacement caused by the Coriolis force generated in proportion to the applied angular rate as the capacitive change.

The vibrating sensor element 1a is supported by the four springs 5a. The springs 5a each include one end connected to the vibrating sensor element 1a and the other end connected to the anchorage 6 combined with the supporting substrate. Parts of the anchorages 6 shown by broken line are connected to the supporting substrate forming the substructure. Other parts of the vibrating sensor element 1a and the springs 5a except the above are floated from the supporting substrate forming the substructure. Accordingly, the vibrating sensor element 1a is supported in the vibratile manner not only in the x- and y-axis directions but also in the z-axis direction. The springs 5a form beams of the flexible structure in which the beams extending in the x- and y-axis directions are connected. Since the springs 5a form the beams having the aspect ratio equal to or larger than 5, the rigidity of the springs in the z-axis direction is very high as compared with that in the remaining two axial directions. The single beam may be considered to have the function of the springs in the x- and y-axis directions. The structure of supporting the vibrating sensor element 1a by the four beams is equivalent to the structure of supporting the vibrating sensor element 1a by the four springs 5a as shown in Fig. 1.

The vibrating sensor element 1a is vibrated by the electrostatic force. The vibration generation means 2a includes a pair of comb electrodes disposed opposite to each other in the y-axis direction. The comb includes 15 receiving parts (recessions) formed to fit or mesh with 15 fingers (protrusions) formed integrally with the vibrating sensor element 1a as shown in Fig. 2 and extending in the y-axis direction. The fingers and the receiving parts are not connected electrically and accordingly when a voltage is applied between the vibrating sensor element 1a connected to the fingers and the receiving parts, the electrostatic force is generated between the fingers and the receiving parts in parallel to the y-axis direction. The number of fingers in this case is not limited to the above number and may be larger or smaller than it. In the island in which the receiving parts are formed, part shown by broken line is the fixed part connected to the supporting substrate forming the substructure. Accordingly, the island in which the receiving parts are formed is not moved. When the electrostatic force is generated in the comb electrodes, the vibrating sensor element 1a is attracted to the island in which the receiving parts are formed. The attraction can be made at certain periods to thereby vibrate the vibrating sensor element 1a.

The method of vibrating the vibrating sensor element 1a by the electrostatic force is now described in detail. First, the vibrating sensor element 1a is maintained to be a potential of about 0.01V. Then, an AC voltage of V_{dc}+Vₒsin ωt is applied to the vibration generation means 2a composed of the comb structure formed in the positive direction of the y-axis, that is, the island in which the receiving parts of the comb are formed. Further, an AC voltage of V_{DC}-Vₒsin ωt is applied to the vibration generation means 2a of the same structure formed in the negative direction of the y-axis, that is, the island in which the receiving parts of the comb are formed. Consequently, the vibrating sensor element 1a is attracted to the side where a potential difference is higher at the frequency ω, so that the vibrating sensor element 1a is vibrated in the y-axis direction. The amplitude of the vibration at this time preferably is maximum and accordingly it is desired that the voltage having the frequency ω is applied to the vibrating sensor element so that the element is vibrated at the resonant frequency.

It is supposed that the resonant frequency in the y-axis direction of the vibrating sensor element 1a is ωy and the resonant frequency in the x-axis direction is ωx. The x-axis direction is the detection direction applied with the Coriolis force proportional to the angular rate. In this case, the beam structure of the springs 5a is preferably designed so that the difference between the resonant frequencies is equal to 2 to 4 %. In case of this difference between the resonant frequencies, the vibration energy in the y-axis direction does not leak in the x-axis direction, that is, unnecessary vibration due to a so-called mechanical coupling is not induced. Further, the vibration adjustment means 4a described later adjusts the application voltage so that the resonant frequency of the vibrating sensor element 1a falls within this range if necessary. It is desired that the resonant frequency ωy in the vibration direction is previously lower than the resonant frequency ωx in the detection direction.

4 vibration detection means 7a in total formed on the side of the vibration generation means 2a have the same comb structure as the vibration generation means 2. In the same manner as the vibration generation means 2a, the broken line parts show parts fixedly connected to the supporting substrate forming the substructure. The vibration detection means 7a are used in order to observe the vibration state of the vibrating sensor element 1a by observing the capacitive change of the comb electrodes. The vibration detection means 7a is used in order to judge whether the vibrating sensor element 1a is driven by the resonant frequency ωy or not.

The vibrating sensor element 1a includes a pair of detection means 3a disposed opposite to each other in the x-axis direction. The broken line parts show parts fixedly connected to the supporting substrate underlying. The detection means 3a detect the displacement in the x-axis direction caused by the Coriolis force generated in proportional to the angular rate applied around the z-axis and the displacement in the x-axis direction caused by acceleration applied in the x-axis direction. The detection means 3a have the comb structure as shown in Fig. 2, in which respective comb fingers are disposed offset to one sides of the receiving parts of the comb in order to sense or detect the displacement in the x-axis direction of the vibrating sensor element 1a, that is, the capacitive change. Such structure can narrow one gap space between the comb fingers and the receiving parts of the comb. The capacitance of the capacitor is inversely proportional to the distance and accordingly as the original gap space is narrowed, the capacitive change is relatively increased when minute displacement is caused. On the converse, as the gap space is increased, the sensitivity to variation in the gap space is relatively reduced and accordingly the capacitance in parts where the gap space is large is not almost varied. Accordingly, the comb fingers are disposed offset as compared with the case where the comb fingers are positioned at the middle of the receiving parts of the comb so that one gap space is made as small as possible to thereby improve the sensitivity to the minute displacement caused in the x-axis direction.

Four comb structures disposed on the side of the detection means 3a constitute the vibration adjustment means 4a. The broken line parts show parts fixedly connected to the supporting substructure underlying. When a voltage is applied to the vibration adjustment means 4a, the electrostatic force in the x-axis direction is generated between the vibrating sensor element 1a and the vibration adjustment means 4a. Consequently, the vibration adjustment means 4a can vary the flexibility of vibration in the y-axis direction, that is, the spring rigidity in the y-axis direction. In other words, the spring rigidity (constant) in the y-axis direction formed by four beams can be varied. The four vibration adjustment means 4a influences only the vibrating sensor element 1a and does not influence other vibrating sensor elements. Accordingly, only by applying a voltage to the vibration adjustment means 4a, the vibration state of the vibrating sensor element 1a, that is, the resonant frequency ωy of the vibration can be changed independently.

A large number of through-holes 8a are formed in the vibrating sensor element 1a. The through-holes 8a are required to float the vibrating sensor element 1a from the substrate easily and also required to etch an insulating layer 9 and a handle substrate 10 positioned under the vibrating sensor element 1a to form a groove 11 easily. Since the insulating layer 9 and the handle substrate 10 positioned under the vibrating sensor layer are etched to form the groove, the vibrating sensor element 1a can be supported in the vibratile state in the x- and y-axis directions.

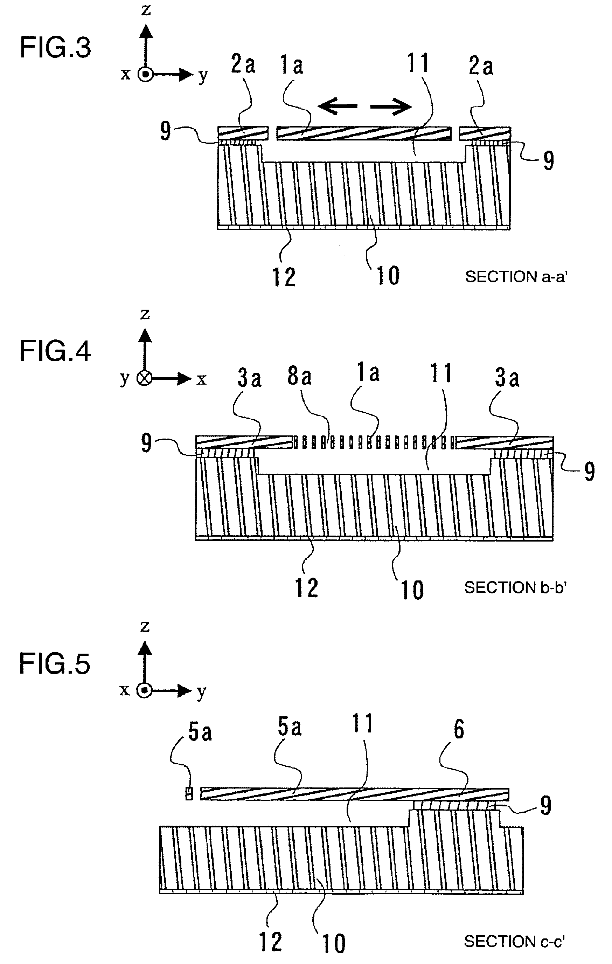

Fig. 3 is a sectional view taken along line a-a' of the vibrating sensor element 1a shown in Fig. 2. The vibrating sensor element 1a is composed of the SOI substrate as described above. The substrate in which the vibrating sensor element 1a and the vibration generation means 2a are formed is the device layer. The vibration generation means 2a is bonded to the handle substrate 10 through the insulating layer 9 made of thermal oxide layer. A metal layer 12 is formed on the back of the handle substrate 10. The groove 11 is formed under the vibrating sensor element 1a, so that the vibrating sensor element 1a can be vibrated due to the groove 11. It is considered to be proper that the metal layer 12 is made of Au/Cr, Au/Ti, Au/Pt/Ti, Al, W, WSi and MoSi and the metal layer may be made of a combination thereof. Further, other metal layer may be used.

Fig. 4 is a sectional view taken along line b-b' of the vibrating sensor element 1a shown in Fig. 2. The insulating layer 9 and the handle substrate 10 positioned under the vibrating sensor layer 1a are etched through the through-holes 8a formed in the vibrating sensor element 1a to form the groove 11. Since the groove 11 is formed, the vibrating sensor element 1a is supported in the floated state. The detection means 3a is fixed to the handle substrate 10 through the insulating layer 9.

Fig. 5 is a sectional view taken along line c-c' of the vibrating sensor element 1a shown in Fig. 2. Fig. 5 shows a sectional structure of the beams forming the spring 5a and the anchorage 6 for supporting the vibrating sensor element 1a. As shown in Fig. 5, the anchorage 6 is fixed to the handle substrate 10 through the insulating layer 9. The groove 11 formed by etching contribues to floating the spring 5a from the substrate.

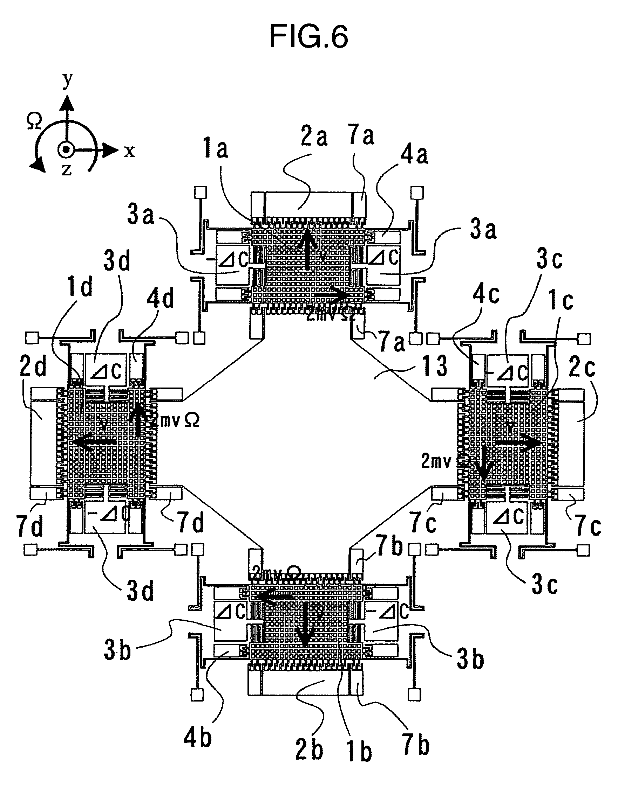

Fig. 6 is a top view showing the whole combined sensor including the vibrating sensor elements 1a shown in Fig. 2 which are disposed in the same configuration as that of the vibrating sensor elements shown in Fig. 1. The vibrating sensor elements 1a, 1b, 1c and 1d are fixedly supported in the vibratile state in the x- and y-axis directions without interference in vibration. Common vibration generation means 13 is disposed in the center of the area where the vibrating sensor elements 1a, 1b, 1c and 1d are positioned. The vibrating sensor elements 1a and 1b constitute one vibration unit and vibrate in out-of-phase mode (tunning-fork vibration) in the y-axis direction by means of the common vibration generation means 13 and the vibration generation means 2a and 2b. On the other hand, the vibrating sensor elements 1c and 1d constitute the other vibration unit and vibrate in out-of-phase mode (tunning-fork vibration) in the x-axis direction by the common vibration generation means 13 and the vibration generation means 2c and 2d. The vibration state, that is, the resonant frequency at this time can be monitored by the vibration detection means 7a, 7b, 7c and 7d provided in the vibrating sensor elements 1a, 1b, 1c and 1d independently.

The method of vibrating the vibrating sensor elements 1a, 1b, 1c and 1d in out-of-phase mode is now described. First, the vibrating sensor elements 1a, 1b, 1c and 1d are maintained to be a potential of about 0.01V. Then, an AC voltage of V_{dc}+Vₒsin ωt is applied to the common vibration generation means 13 to which the receiving parts of the four combs are connected. Further, an AC voltage of V_{dc}-Vₒsin ωt is applied to the vibration generation means 2a, 2b, 2c and 2d disposed opposite to the common vibration generation means 13 and in which the receiving parts of the combs are formed. Consequently, the vibrating sensor elements 1a, 1b, 1c and 1d are periodically attracted to the side where a potential difference is higher, so that the vibrating sensor elements 1a, 1b, 1c and 1d are vibrated at the frequency ω. The vibrating sensor elements 1a and 1b are vibrated in the y-axis direction at the frequency ω and the vibrating sensor elements 1c and 1d are vibrated in the x-axis direction at the frequency ω. In this case, the vibrating sensor elements 1a, 1b, 1c and 1d are first attracted to the common vibration generation means 13 to be moved toward the common vibration generation means 13 and then attracted in the opposite direction thereto to be moved. The frequency ω at this time is desirably the resonant frequency in order to get the maximum speed and the maximum displacement. In order to drive the vibrating sensor elements at the resonant frequency, it is desired that the vibration detection means 7a, 7b, 7c and 7d provided in the vibrating sensor elements 1a, 1b, 1c and 1d are used to monitor the frequency of vibration and the monitored vibration frequency is fed back to a control circuit so that the vibrating sensor elements are driven at the resonant frequency.

If there is the individual difference caused by error due to fabrication in the vibrating sensor elements, there occurs deviation in vibration caused by the individual difference, that is, deviation in the resonant frequency of the vibration. In the combined sensor of the embodiment, the vibrating sensor elements 1a, 1b, 1c and 1d are supported independently and the vibration adjustment means 4a, 4b, 4c and 4d are independently provided in the vibrating sensor elements, respectively. Accordingly, the individual difference in the individual vibrating sensor elements, that is, the resonant frequency of the respective vibrating sensor elements can be adjusted without influencing other vibrating sensor elements. The resonant frequency varied by the adjustment can be grasped by means of the vibration detection means 7a, 7b, 7c and 7d. The voltage applied to the vibration adjustment means 4a, 4b, 4c and 4d can be decided on the basis of the signals obtained from the vibration detection means 7a, 7b, 7c and 7d, so that the resonant frequencies of the vibrating sensor elements 1a, 1b, 1c and 1d can be made identical. In this manner, the resonant frequencies of the vibrating sensor elements can be made identical to maintain the detection characteristic of the combined sensor to an ideal state. Accordingly, the combined sensor having the above-mentioned structure can get the desired vibration characteristic easily.

The detection method of the angular rate and the acceleration in the combined sensor of the structure is now described. It is considered that the respective vibrating sensor elements are vibrated in one direction of the respective axes. For example, it is supposed that the vibrating sensor element 1a is moved at the speed v in the positive direction of the y-axis, the vibrating sensor element 1b is moved at the speed v in the negative direction of the y-axis, the vibrating sensor element 1c is moved at the speed v in the positive direction of the x-axis and the vibrating sensor element 1d is moved at the speed v in the negative direction of the x-axis. At this time, when the angular rate Ω is applied around the z-axis, the Coriolis force of 2 mvΩ proportional to the angular rate Ω is applied to the vibrating sensor elements in the directions shown in Fig. 6. The mass of the vibrating sensor element is given as m. Accordingly, the space between the comb fingers forming the detection means 3a, 3b, 3c and 3d of the vibrating sensor elements, which are formed in the detection direction perpendicular to the vibration direction is varied by the Coriolis force is varied. Consequently, the capacitance is varied or changed as ΔC and -ΔC. This capacitive changes can be differentially amplified to get the capacitive change of 2 ΔC in the vibrating sensor elements 1a, 1b, 1c and 1d. Further, the capacitive change are added for each of the vibration units forming the out-of-phase vibration, so that the capacitive change of 4 ΔC can be taken out. The total capactive change of 8 ΔC obtained by adding the capacitve change obtained in the vibration units can be taken out as the value proportional to the angular rate Ω. Actually, the capacitances taken out by the detection means 3a, 3b, 3c and 3d are subjected to capacitance-to-voltage (C-V) conversion to take out the displacement caused by the Coriolis force as voltage change ΔV. The taken out signals are added to calculate 8 ΔV. This signal is synchronously detected by the resonant frequency of the change signal to get a DC voltage variation corresponding to the angular rate Ω. In this manner, the angular rate Ω can be detected.

There is considered the case where the accelerations aₓ and a_{y} are further applied to the x- and y-axis directions, respectively, in the above state. The accelerations exert the force of maₓ in the x-axis direction and the force of may in the y-axis direction on the vibrating sensor elements. The capactive change caused by the accelerations in accordance with the forces are added to the capacitive change caused by the Coriolis force to be applied to the detection means 3a, 3b, 3c and 3d formed in the vibrating sensor elements. It is supposed that the capactive change caused by the acceleration aₓ is ΔCₓ and the capacitive change caused by the acceleration a_{y} is ΔC_{y}. The capacitive change of ΔC+ΔCₓ in total is produced in the detection means 3a formed in the positive direction of the x-axis of the vibrating sensor element 1a. The capacitive change of -ΔC-ΔCₓ in total is produced in the detection means 3a formed in the negative direction of the x-axis of the vibrating sensor element 1a. When these capacitive changes are differentially amplified, the capacitive change in the vibrating sensor element 1a is equal to 2(ΔC+ΔCₓ). Similarly, the capacitive change produced in the vibrating sensor element 1b is equal to 2(ΔC-ΔCₓ). These capacitive changes can be added to get the capacitive change 4ΔC proportional to the angular rate Ω. On the other hand, when these capacitances are differentially amplified, the capacitive change 4ΔCₓ proportional to the acceleration aₓ can be obtained. Accordingly, the acceleration aₓ applied in the x-axis direction by the vibration unit constituted by the vibrating sensor elements 1a and 1b can be detected by monitoring the capacitive change of the vibrating sensor elements. Next, the acceleration a_{y} is detected in the same manner as above. The capacitive change of -ΔC+ΔC_{y} in total is produced in the detection means 3c formed in the positive direction of the y-axis of the vibrating sensor element 1c. The capacitive change of ΔC-ΔCₓ in total is produced in the detection means 3c formed in the negative direction of the y-axis of the vibrating sensor element 1c. When these capacitive changes are differentially amplified, the capacitive change in the vibrating sensor element 1c is equal to 2(ΔC-ΔC_{y}). Similarly, the capacitive change produced in the vibrating sensor element 1d is equal to 2(ΔC+ΔC_{y}). These capacitive changes can be added to get the capacitive change 4ΔC proportional to the angular rate Ω. On the other hand, when these capacitive changes are differentially amplified, the capacitive change 4ΔC_{y} proportional to the acceleration a_{y} can be obtained. Accordingly, the acceleration a_{y} applied in the y-axis direction by the vibration unit constituted by the vibrating sensor elements 1c and 1d can be detected by monitoring the capacitive change of the vibrating sensor elements. Actually, the obtained capacitance is subjected to capacitance-voltage (C-V) conversion to be taken out as a voltage change ΔV. This signal is synchronously detected by the resonant frequency of the vibration signal to get a DC voltage change corresponding to the angular rate Ω or a DC voltage change corresponding to the accelerations aₓ and a_{y}.

By using the above-mentioned method, the combined sensor of the present invention can detect the angular rate Ω applied around the z-axis and the accelerations aₓ and a_{y} applied to the two axes in the plane of the substrate.

### EMBODIMENT 2

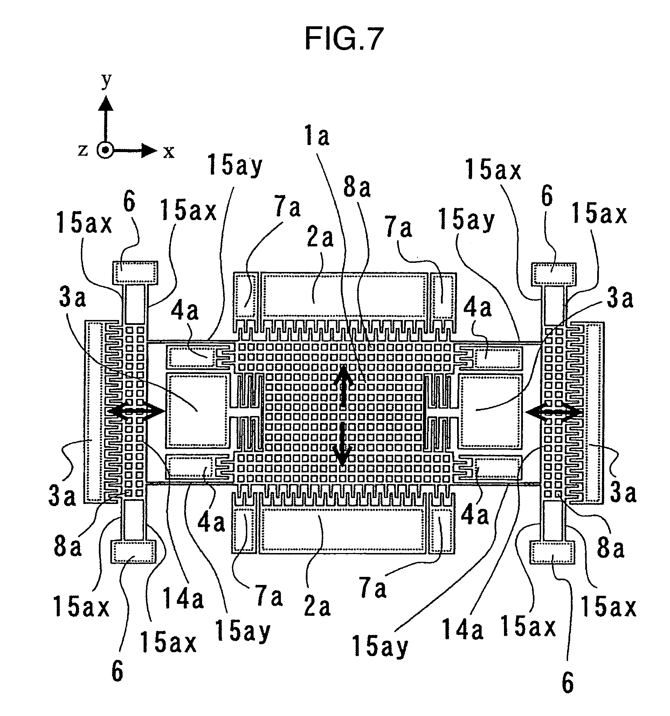

Fig. 7 is a top view showing a vibrating sensor element 1a constituting a combined sensor according to a second embodiment of the present invention. The vibrating sensor element 1a is formed by dry-etching of a silicon-on-insulator (SOI) substrate in the same manner as that in the first embodiment. Different structure from the first embodiment is described. In the second embodiment, vibration separating plates 14a are disposed in order to separate the vibration in the x-axis direction and the vibration in the y-axis direction clearly. X-axis-directional spring beams 15ax that are springs in the x-axis direction and y-axis-directional spring beams 15ay that are springs in the y-axis direction are connected to the vibration separating plates 14a. As shown in Fig. 7, 4 x-axis-directional spring beams 15ax and 2 y-axis-directional spring beams 15ay are connected to one vibration separating plate 14a. Further, through-holes 8a are formed in the vibration separating plates14a and a lower layer of the vibration separating plates 14a is etched. Accordingly, the vibration separating plates 14a are also floated from the substrate in the same manner as the vibrating sensor element 1a and fixedly supported to the anchorages 6 serving as fixing ends. Fingers of comb are formed on one side of the vibration separating plate 14a to form detection means 3a constituted by the comb structure.

The function of the vibration separating plates 14a is now described. In this case, since the vibrating sensor element 1a is supported by the y-axis-directional spring beams 15ay that are flexible beams in the y-axis direction, the vibrating sensor element 1a is easily vibrated in the y-axis direction at the resonant frequency ωy. In this case, since the x-axis-directional spring beams 15ax connected to the vibration separating plates 14a are disposed in parallel to the y-axis direction, the spring rigidity in the y-axis direction of the beams is very large, so that the beams are not bent in the y-axis direction. Accordingly, the vibration separating plates 14a are not vibrated in the y-axis direction. On the other hand, when an angular rate is applied around the z-axis, the Coriolis force is produced in the x-axis direction. In other words, the direction of the Coriolis force applied to the variation separating plates 14a is as shown by arrow. Since the x-axis-directional spring beams 15ax are flexible in the x-axis direction, the beams are bent easily in the x-axis direction. Accordingly, the vibration separating plates 14a are moved easily in the x-axis direction in response to the applied Coriolis force. As described above, since the vibration separating plates 14a are supported by the spring beams 15ax and 15ay, the vibration separating plates can separate vibrations intentionally. The vibration separating plates 14a contribute to suppression of a so-called mechanical coupling that vibration in one axis leaks to the other axis so that vibration is continued without intention. With the same structure as the first embodiment, the capacitive change obtained from the detection means 3a that can detect the displacement caused by only the separated Coriolis force is utilized in addition to the capacitive change obtained from the detection means 3a formed in the vibrating separating element 1a, so that the detection sensitivity to the angular rate of the vibrating sensor element 1a can be improved.

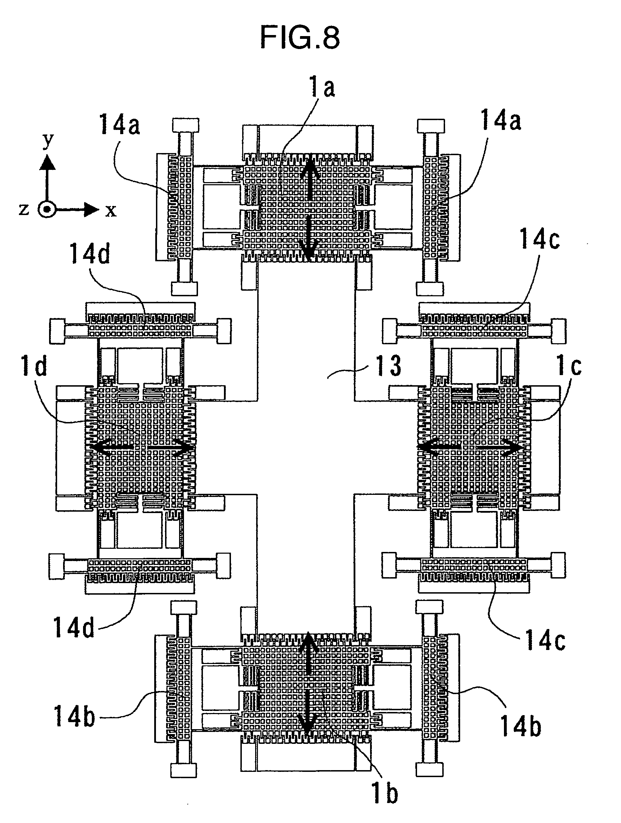

Fig. 8 is a top view showing a combined sensor including the vibrating sensor element 1a according to the second embodiment equipped with the vibration separating plates 14a shown in Fig. 7 and vibrating sensor elements 1b, 1c and 1d. The vibrating sensor element 1b is equipped with vibration separating plates 14b, the vibrating sensor element 1c is equipped with vibration separating plates 14c and the vibrating sensor element 1d is equipped with vibration separating plates 14d. The operation of the combined sensor and the detection principle of the angular rate around the z-axis and the accelerations in the x- and γ-axis directions are the same as the first embodiment described with reference to Fig. 6.

### EMBODIMENT 3

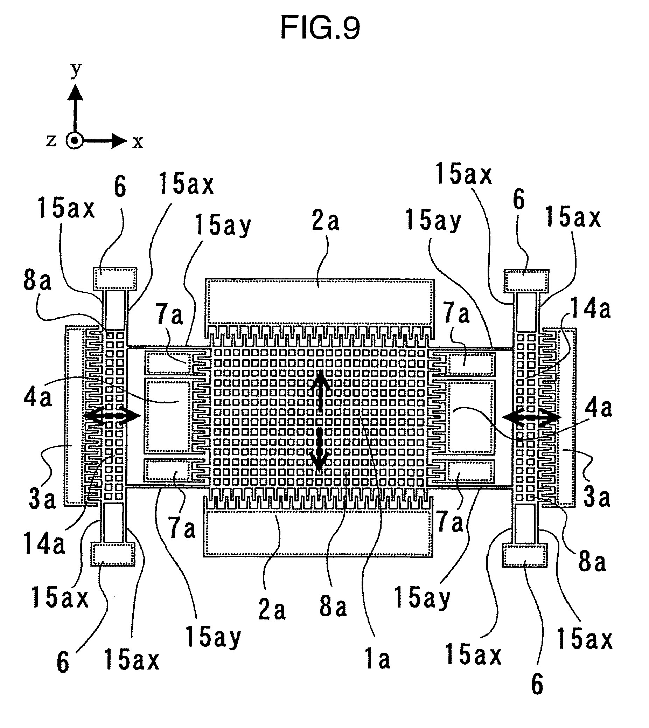

Fig. 9 is a top view showing a vibrating sensor element 1a constituting a combined sensor according to a third embodiment of the present invention. The third embodiment is structured on the basis of the second embodiment. That is, the third embodiment includes the vibration separating plates 14a. The third embodiment is different from the second embodiment in that the detection means 3a of the comb structure formed in the vibrating sensor element 1a is removed and instead there are provided a pair of vibration adjustment means 4a disposed opposite to each other and 4 vibration detection means 7a disposed on the side of the vibration adjustment means 4a. Other structure is the same as that of the vibrating sensor element 1a of the second embodiment. Accordingly, the vibration principle of the vibrating sensor element 1a and the detection principle of the angular rate and the accelerations in the third embodiment are the same as the second embodiment. Four vibrating sensor elements of the third embodiment can be disposed in the same manner as the structure of the combined sensor of Fig. 8 shown in the second embodiment to form a third combined sensor of the present invention.

### EMBODIMENT 4

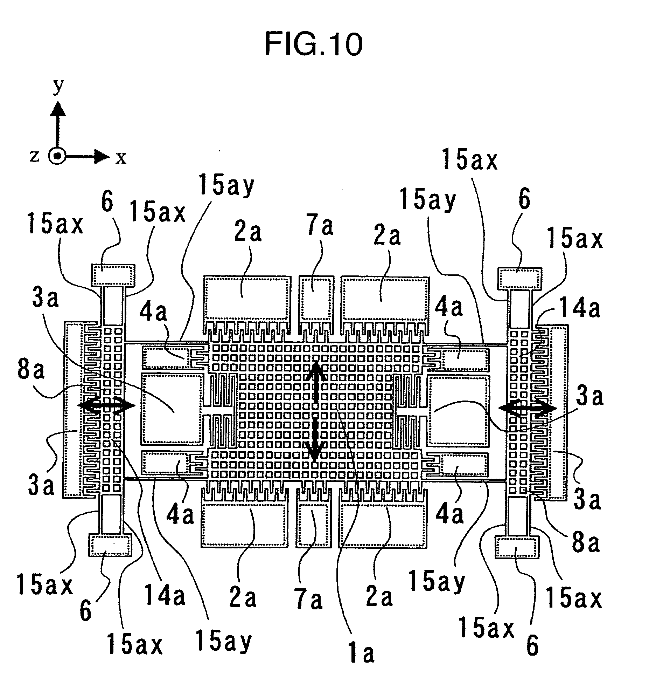

Fig. 10 is a top view showing a vibrating sensor element 1a constituting a combined sensor according to a fourth embodiment of the present invention. The fourth embodiment is structured on the basis of the second embodiment similarly. That is, the fourth embodiment includes vibration separation plates 14a. The fourth embodiment is different from the second embodiment in that the vibration generation means 2a of the comb structure formed in the vibrating sensor element 1a is divided and vibration detection means 7a are provided between the divided vibration generation means 2a. Other structure is the same as that of the vibrating sensor element 1a of the second embodiment. Accordingly, the vibration principle of the vibrating sensor element 1a and the detection principle of the angular rate and the accelerations in the fourth embodiment are the same as the second embodiment. Four vibrating sensor elements of the fourth embodiment can be disposed in the same manner as the structure of the combined sensor of Fig. 8 shown in the second embodiment to form a fourth combined sensor of the present invention.

### EMBODIMENT 5

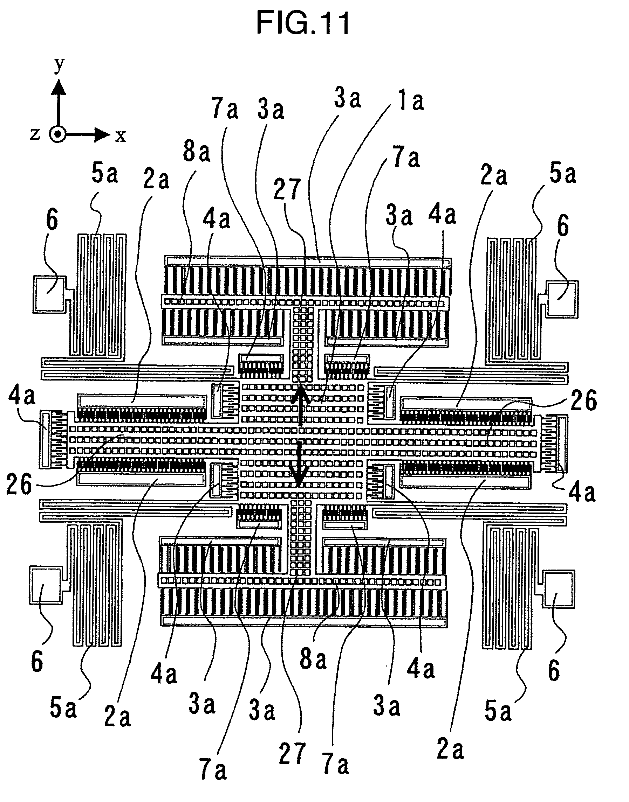

Fig. 11 is a top view showing a vibrating sensor element 1a constituting a combined sensor according to a fifth embodiment of the present invention. The vibrating sensor element 1a is formed by dry-etching of a silicon-on-insulator (SOI) substrate in the same manner as the first embodiment. The silicon substrate on the side of a device layer (active layer) of a silicon-on-insulator wafer is the {100}-oriented silicon substrate and the silicon substrate on the side of a handle layer is the (111)-oriented silicon substrate. The primary flat of the {100}-oriented silicon substrate has the orientation of <110> and the primary flat of the (111)-oriented silicon substrate has the orientation of [-110]. The silicon-on-insulator substrate is formed into a lamination in which the primary flats are piled up so that the directions thereof are the same and an insulating layer thereof is a thermal oxide layer having a thickness of 0.5 µm. The resistivities of the oriented silicon substrates are suitably about 0.001 Ωcm to 0.01 Ωcm.

Alternatively, the silicon substrate on the side of the device layer (active layer) and the silicon substrate on the side of the handle layer of the above-mentioned SOI wafer may be the {100}-oriented silicon substrate. In this case, the primary flats in the {100}-oriented silicon substrates have the orientation of <110> and the silicon substrates are piled up so that the directions of the primary flats are identical. In this case, the insulating layer is a thermal oxide layer having a thickness of 2.0 to 4.0 µm or a silicon oxide layer formed by TEOS-CVD and having a thickness of 2.0 to 10.0 µm. Further, the resistivity of the silicon substrate is suitably about 0.001 Ωcm to 0.01 Ωcm.

Different structure from the above embodiments is mainly described. The vibrating sensor element 1a includes two vibration generation beams 26 extending in the opposite directions to each other in the x-axis direction from an approximately square vibration mass and two T-shaped detection beams 27 extending in the opposite directions to each other in the y-axis direction from the vibration mass. The vibration generation beams 26 each include vibration generation means 2a disposed opposite to the vibration generation beams 26 and constituting means for generating electrostatic force to vibrate the vibrating sensor element 1a in the y-axis direction as shown by arrow. The T-shaped detection beams 27 include detection means 3a for measuring displacement caused by the Coriolis force generated in response to the applied angular rate and displacement caused by acceleration applied in the x-axis direction. In Fig. 11, one of the detection means 3a is disposed in the positive direction of the y-axis in the T-shaped detection beam 27 and two of the detection means 3a are disposed in the negative direction of the y-axis in the T-shaped detection beam 27. The detection means 3a having such structure are formed in each of the detection beams 27. The vibrating sensor element 1a including the two vibration generation beams 26 and the two detection beams 27 connected thereto constitutes a vibration mass and a large number of through-holes 8a are formed therein. The through-holes 8a contribute greatly to etching the insulating layer 9 and the handle layer 10 positioned under the vibrating sensor element 1a and to floating the vibrating sensor element 1a from the substrate. The vibrating sensor element 1a having such structure is vibrated by the vibration generation means 2a at the resonant frequency in the y-axis direction. The vibrating sensor element 1 constituting such vibration mass is supported in the vibratile state in the plane and out of the plane by means of four vibration springs 5a formed by connecting a plurality of beams constructed by connecting the beams extending in the x-axis direction in the bent structure and by connecting the beams extending in the y-axis direction in the bent structure. Since one ends of the springs 5a form the anchorages fixed to the substrate, the vibrating sensor element 1a is supported in the above state. Further, the vibrating sensor element 1a includes four vibration detection means 7a for monitoring the vibration state, that is, the resonant frequency of the vibration. In addition, six vibration adjustment means 4a in total for changing the resonant frequency of the vibration are provided. The vibration generation means 2a, the detection means 3a, the vibration adjustment means 4a and the vibration detection means 7a as described above have the comb structure. The vibration generation means 2a and the vibration adjustment means 4a are means for generating the electrostatic force by applying a voltage. The detection means 3a can monitor change in the capaticance caused by changing gaps of the comb to detect displacement caused by the Coriolis force or acceleration, that is, the applied angular rate and the angular rate. Further, the vibration detection means 7a monitors change in the capacitance caused by change in the overlap length of the comb to thereby monitor the vibration state, that is, the resonant frequency. The voltage to be applied to the vibration adjustment means 4a is decided on the basis of the frequency obtained from the vibration detection means 7a and the decided voltage is applied to the vibration adjustment means 4a to adjust the resonant frequency. The vibration principle of the vibrating sensor element 1a and the detection principle of the angular rate and the acceleration in the fifth embodiment are the same as the second embodiment. The four vibrating sensor elements of the fifth embodiment can be disposed in the same manner as the structure of the combined sensor of Fig. 8 shown in the second embodiment to form the fifth combined sensor of the present invention.

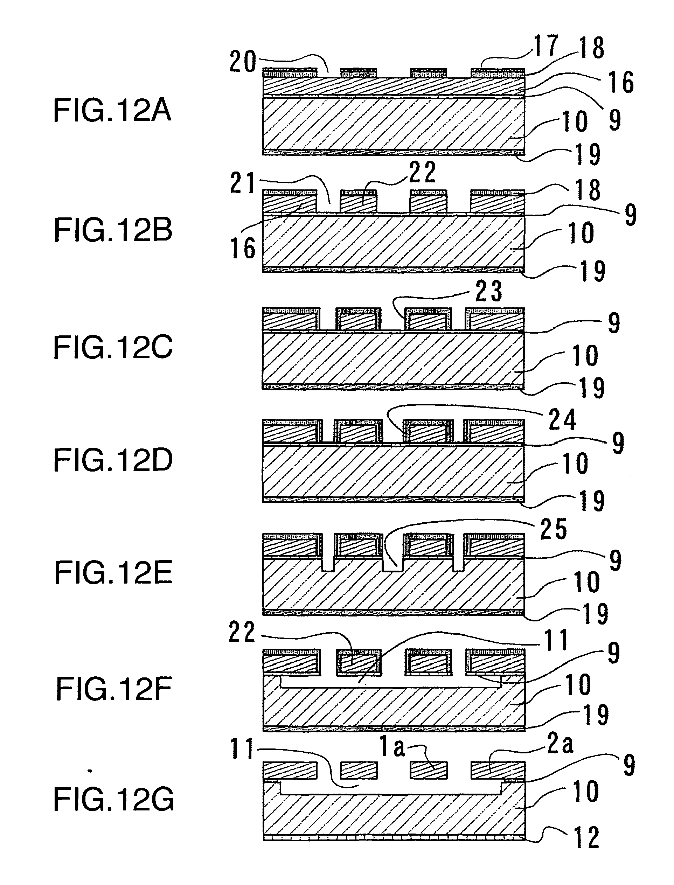

Referring now to Figs. 12A to 12G, a method of fabricating the vibrating sensor element 1a constituting the combined sensor of the present invention is described. The vibrating sensor element 1a is formed using a silicon-on-insulator substrate. In the embodiment, the silicon substrate of a device layer 16 of a silicon-on-insulator wafer is a {100}-oriented silicon substrate and the silicon substrate of a handle layer 10 is a (111)-oriented silicon substrate. The vibrating sensor element 1a is formed by the deep reactive ion etching (RIE) of the device layer 16. The primary flat of the (100)-oriented silicon substrate has the orientation of <110> and the primary flat of the (111)-oriented silicon substrate has the orientation of [-110]. The silicon-on-insulator substrate is formed into a lamination in which the primary flats are piled up so that the directions thereof are the same and an insulating layer thereof is a thermal oxide layer having a thickness of 0.3 µm. The resistivities of the oriented silicon substrates are suitably about 0.001 Ωcm to 0.01 Ωcm.

In the process of Fig. 12A, the silicon-on-insulator substrate is thermally oxidized so that a front-side thermal oxide layer 18 (SiO₂ layer) and a back-side thermal oxide layer 19 are formed on both sides of the substrate. Then, an aluminum thin-film layer 17 is formed on the thermal oxide layer by sputtering. In this case, evaporation may be used instead of the sputtering to form the layer. Thereafter, the photolithography and etching by using a resist mask pattern obtained by the photolithography as a mask carried out for the vibrating sensor element 1a. The mask pattern 20 has a two-layer structure of the aluminum thin film layer 17 and the front-side thermal oxide layer 18. Finally, the resist mask pattern is removed by the oxygen plasma. The photolithography means the process in which a resist is spin-coated on the substrate and the pattern of the vibrating sensor element 1a formed on photomask is then transferred to the resist. In this process, baking, exposure and development of the resist are performed. The aluminum thin film layer 17 is etched by using etchant including phosphoric acid, acetic acid, nitric acid and water and the front-side thermal oxide layer 18 is etched by the reactive ion etching (RIE) using chlorofluorocabon gas.

In the process of Fig. 12B, the device layer 16 is etched by the deep reactive ion etching of silicon using the mask pattern 20 obtained in the process of Fig. 12A as a mask to form a trench groove 21 and silicon structure 22 for formation of the vibrating sensor element. The deep reactive ion etching of silicon means the etching method of forming a trench groove by repeating isotropic etching of silicon using SF₆ gas and formation of polymer layer for protection of the sidewall the groove using C₄F₈ gas. Since this method uses inductively coupled plasma (ICP), it is also named ICP-RIE. After the deep reactive ion etching has been carried out, ashing by oxygen plasma is made and the aluminum thin film layer 17 is removed.

In the process of Fig. 12C, after RCA cleaning has been carried out, thermal oxidation is carried out to form thermal oxide layer 23 on the sidewall of the trench groove 21.

In the process of Fig. 12D, polymer layer is formed using C₄F₈ gas, so that the polymer layer is formed uniformly on the surface of the substrate.

In the process of Fig. 12E, C₄F₈ gas is used to make trench etching of SiO₂ using the inductively coupled plasma (ICP). In the trench etch, in order to etching SiO₂, a high bias exceeding 200W is applied to the substrate. Ions accelerated by the bias collide with the surface of the substrate, so that the polymer layer is removed immediately. However, since the ions do not collide with the polymer layer 24 formed on the sidewall of the trench groove 21 directly, the polymer layer 24 formed on the sidewall of the groove is not etched. Accordingly, anisotropic trench etching of SiO₂ can be attained. The insulating layer 9 formed on the bottom of the trench groove 21 can be etched by the above trench etching. As described above, since the sidewall of the trench groove 21 is protected by the polymer layer 24 formed in advance, the thermal oxide layer is not etched. After the insulating layer 9 has been etched, the polymer layer 24 is removed by oxygen plasma. Next, the deep reactive ion etching of silicon is carried out to etch the handle substrate 10, so that grooves 25 are formed in the handle substrate. The amount of etching in this case is properly 5 to 30 µm. This value is decided in consideration of the tolerance to shock of the vibrating sensor element 1a to be fabricated.

In the process of Fig. 12F, RCA cleaning is carried out. Next, anisotropic etching of silicon is carried out using tetramethylammonium hydroxide (TMAH) having the concentration of 25 %. The surface orientation of the handle substrate 10 is (111) and the orientation of the primary flat is [-110]. Accordingly as the anisotropic etching is advanced, the groove 11 is formed under the silicon structure 22 for formation of the vibrating sensor element as shown in Fig. 12F.

In the process of Fig. 12G, BHF (mixed solution of hydrofluoric acid and ammonium fluoride) is used to remove the oxide layer of silicon on the surface of the substrate. Thereafter, IPA steam drying is carried out and the vibrating sensor element 1a is formed in the floated state from the substrate. Finally, a metal layer 12 is formed on the surface of the handle substrate 10 by sputtering or evaporation.

The depth of the groove 11 is decided when the groove 25 is formed in the handle substrate. The reason thereof is that the etching in the thickness direction of the substrate is not advanced apparently in the anisotropic etching of silicon using TMAH since the handle substrate is the (111)-oriented silicon substrate. On the contrary, only the etching in the transverse direction is advanced remarkably. This reason is that the orientation of the primary flat is designated to [-110]. Accordingly, the depth of the groove 11 is controlled by the depth of the groove 25 in the handle substrate. It is stated before that the depth thereof is properly 5 to 30 µm, although when the shock given in the thickness direction of the substrate is increased, the depth of the groove 25 in the handle substrate is decided so that the vibrating sensor element 1a does not collide with the handle substrate 10 in consideration of the increased shock. As described above, since the depth of the groove 11 positioned under the vibrating sensor element 1a can be controlled arbitrarily, the combined sensor of the present invention having the vibrating sensor element 1a as its constituent element has the high tolerance to shock.

It should be further understood by those skilled in the art that although the foregoing description has been made on embodiments of the invention, the invention is not limited thereto and various changes and modifications may be made without departing from the spirit of the invention and the scope of the appended claims.

## Claims

1. A combined sensor for detecting accelerations applied to two axes in a horizontal plane of a substrate and an angular rate applied around an axis perpendicular to the two axes, comprising:
at least four vibrating sensor elements (1a, 1b, 1c, 1d) supported above the substrate (10) in a vibratile state in the plane or out of the plane of the substrate;
each of the four vibrating sensor elements including:
at least two vibration units (1a, 1b; 1c, 1d) having vibration directions crossing each other; and
a pair of detection means (3a, 3b, 3c, 3d) disposed opposite to each other in a direction perpendicular to vibration direction of the vibrating sensor element;
each of the four vibrating sensor elements being supported in the substrate independently so that vibrations do not interfere with each other.

2. A combined sensor for detecting accelerations applied to two axes in a horizontal plane of a substrate and an angular rate applied around an axis perpendicular to the two axes, comprising:
at least four vibrating sensor elements (1a, 1b, 1c, 1d) supported above the substrate (10) in a vibratile state in the plane or out of the plane of the substrate;
each of the four vibrating sensor elements including:
at least two vibration units (1a, 1b; 1c, 1d) having vibration directions crossing each other in the plane;
a pair of T-shaped detection beams (27) extending in a vibration direction in the plane for detecting the angular rate and the accelerations and disposed opposite to each other in line symmetrically with an axis in the plane passing through the center of gravity of the vibrating sensor element and perpendicular to the vibration direction in the plane; and
a pair of vibration generation beams (26) extending in a direction of the axis in the plane and disposed opposite to each other in line symmetrically with a vibration axis in the plane passing through the center of gravity of the vibrating sensor element and parallel to the vibration direction in the plane;
the detection beams (27) including detection means (3a);
the vibration generation beams (26) including vibration generation means (2a);
each of the four vibrating sensor elements including a plurality of connection beams extending in the vibration direction in the plane and in a direction in the plane perpendicular to the vibration direction and being independently supported to the substrate by the connection beams so that vibrations do not interfere with each other.

3. A combined sensor according to Claim 1, comprising common vibration means (13) for vibrating the vibrating sensor elements.

4. A combined sensor according to Claim 1 or 2, wherein the vibrating sensor elements are disposed so that the vibration directions of the vibration units cross each other at right angles.

5. A combined sensor according to Claim 1 or 2, wherein the vibrating sensor element is composed of silicon substrates piled up and between which glass is held and the silicon substrate supporting the vibrating sensor element is a {111}-oriented silicon substrate, the vibrating sensor element being supported in a vibratile state by forming groove (11) in the oriented silicon substrate.

6. A combined sensor according to Claim 1 or 2, wherein each of the four vibrating sensor elements includes adjustment means (4a, 4b, 4c, 4d) for adjusting a frequency of vibration and vibration detection means (7a, 7b, 7c, 7d) for detecting the frequency of vibration.

7. A method of fabricating a combined sensor including vibrating sensor elements (1a, 1b, 1c, 1d) supported independently so that vibrations do not interfere with each other, comprising:
a process (Fig. 12A) of forming, on a silicon-on-insulator (SOI) wafer, mask material for dry-etching of a silicon in the silicon-on-insulator wafer;
a process (Fig. 12B) of dry-etching of the silicon using the mask material to form a trench groove (21);
a process (Fig. 12C) of forming a thermal oxide layer (23) of silicon on the surface of the silicon-on-insulator wafer;
a process (Fig. 12D) of forming a polymer layer (24) on the sidewall of the trench groove (21);
a process (Fig 12E) of etching thermal oxide layer (9) at a bottom of the trench groove (21);
a process (Fig 12F) of forming a groove (11) in the silicon substrate (10) supporting the vibrating sensor element in the silicon-on-insulator wafer by dry-etching; and
a process (Fig. 12G) of etching the silicon substrate supporting the vibrating sensor element by anisotropic etching of silicon to form groove (11) under the vibrating sensor element.
